# EUROPEAN PATENT APPLICATION

(11) **EP 4 145 832 A1**
(43) Date of publication of application: **08.03.2023**
(21) Application number: 22192145.5
(22) Date of filing: 25.08.2022
(51) Int. Cl.: H04N 19/597, H04N 19/70, H04N 19/169, H04N 19/187

(54) **AN APPARATUS, A METHOD AND A COMPUTER PROGRAM FOR VOLUMETRIC VIDEO**

(30) Priority: 02.09.2021 FI 20215921
(71) Applicant: Nokia Technologies Oy, 02610 Espoo (FI)
(72) Inventor: Kondrad, Lukasz, 80331 Munich (DE); Malamal Vadakital, Vinod Kumar, 33870 Tampere (FI); Hannuksela, Miska, 33610 Tampere (FI); Santamaria Gomez, Maria Claudia, 33210 Tampere (FI)
(74) Representative: Berggren Oy

(57) **Abstract**

There is disclosed a method comprising: obtaining bitstreams of video components of a layered volumetric video; analyzing the video components to determine a relationship between the video components and corresponding layers; providing signaling elements to indicate if the volumetric video comprises video components at different layers; providing in the signaling elements information of the relationship between the video components and corresponding layers; encapsulating the layered video coded bitstreams to visual volumetric video-based coding units; and constructing a bitstream according to specified constraints. There is also disclosed a method comprising: receiving a bitstream comprising video components of a layered volumetric video; demultiplexing video components of the volumetric video; receiving signaling elements; examining the signaling elements to determine if the volumetric video comprises video components at different layers; extracting from the one or more signaling elements information of relationship between the video components and corresponding layers; and re-multiplexing the layered video components into one layered video bitstream for video decoding.

## Description

The project leading to this application has received funding from the ECSEL Joint Undertaking (JU) under grant agreement No 876019. The JU receives support from the European Union's Horizon 2020 research and innovation programme and Germany, Netherlands, Austria, Romania, France, Sweden, Cyprus, Greece, Lithuania, Portugal, Italy, Finland, Turkey.

### TECHNICAL FIELD

The present invention relates to an apparatus, a method and a computer program for volumetric video coding.

### BACKGROUND

Visual volumetric video-based coding (V3C; defined in ISO/IEC DIS 23090-5) provides a generic syntax and mechanism for volumetric video coding. The generic syntax can be used by applications targeting volumetric content, such as point clouds, immersive video with depth, and mesh representations of volumetric frames. The purpose of the specification is to define how to decode and interpret the associated data (atlas data in ISO/IEC 23090-5) which tells a renderer how to interpret 2D frames for reconstructing volumetric frames.

The two applications of V3C (ISO/IEC 23090-5), i.e. video-based point cloud compression (V-PCC; defined in ISO/IEC 23090-5) and MPEG immersive video (MIV; defined in ISO/IEC 23090-12), use a number of V3C syntax elements with a slightly modified semantics. Moreover, MPEG 3DG (ISO SC29 WG7) group has started a work on a third volumetric video coding application, i.e. V3C mesh compression.

In one scenario, there could be several redundant source representations. For example, patches of the same region in 3D space can be captured from cameras, each from a slightly different viewing angle. These patches can be placed into atlases such that there are significant redundancies between co-located regions in the atlases. In such a case, the V3C atlas components can use a layered representation where, inter-layer prediction techniques can be used to efficiently compress the atlas components.

In another scenario, a volumetric frame can be coded such that the same bitstream can be used for rendering a scene with a differentiated scalable viewing volume. For example, the base layer can be coded as the visible volume as viewed from a single camera in the scene. With only the base layer decoded, a renderer can display the scene in 3DoF. Additional layers, that are independently coded, can be used to code patches representing parts of the scene that become visible as the viewing space becomes larger (allowing for an additional translational movement).

In yet another scenario, each V3C video component could be encoded as part of one layered video bitstream using layered video codec. In this case, one layer could contain the texture component, another could contain the geometry component and yet another the occupancy component. Each access-unit of this layered representation will contain information from one volumetric frame. By setting a common coding structure for all layers, the decoding, buffering and stream synchronization operations would be simpler because all layers will have the same decoding order.

Finally, if all V3C video components were encoded with a layered video encoder, after re-multiplexing on the decoder side, it would be possible to use a single decoder instance with common buffering that could handle the synchronization of the decoded V3C video components frames.

The above scenarios cannot be fulfilled by V3C as V3C bitstream stores V3C video components within independent V3C unit payloads. Furthermore, the V3C parameter set does not provide information about the coding relations of V3C video components, but only provides information on how to utilize the coded representation to reconstruct 3D objects. If V3C video component are encoded by a layered video codec and then split into V3C unit payloads, it may currently be impossible to reconstruct the original layered video coded bitstream, and consequently all the benefits of a layered video codec may be lost.

### SUMMARY

Now, an improved method and technical equipment implementing the method has been invented, by which the above problems are alleviated. Various aspects include a method, an apparatus and a computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to an approach, there is provided signaling information that allows to identify layered V3C video components in V3C bitstream and provides information that additional constraints, during the creation of the V3C bitstream, may have been applied.

It should be noted, however, that the approach may also be implemented with other volumetric video-based coding systems.

In an embodiment, a volumetric frame is provided to a V3C encoder that generates the video components and their associated atlas components. Video components are encoded with a layered video encoder. The V3C encoder maintains information about which layer of the layered video bitstream contains which component and passes this information to a V3C multiplexer. The V3C multiplexer encapsulates the layered video codec bitstreams to V3C units and constructs a bitstream according to specified constraints. The signaling information in the coded V3C bitstream may allow decoding and rendering the complete bitstream, or even parts of the bitstream, ubiquitously.

According to a first aspect, there is provided a method comprising
obtaining bitstreams of video components of a layered volumetric video;
analyzing the video components to determine a relationship between the video components and corresponding layers;
providing one or more signaling elements, based on the analysis, to indicate that the volumetric video comprises video components at different layers;
providing in the one or more signaling elements information of the relationship between the video components and corresponding layers;
encapsulating the layered video coded bitstreams to visual volumetric video-based coding units; and
constructing a bitstream according to specified constraints.

An apparatus according to a second aspect comprises
means for obtaining bitstreams of video components of a layered volumetric video;
means for analyzing the video components to determine a relationship between the video components and corresponding layers;
means for providing one or more signaling elements, based on the analysis, to indicate that the volumetric video comprises video components at different layers;
means for providing in the one or more signaling elements information of the relationship between the video components and corresponding layers;
means for encapsulating the layered video coded bitstreams to visual volumetric video-based coding units; and
means for constructing a bitstream according to specified constraints.

According to an embodiment, the apparatus comprises
means for providing said constructed bitstream to a decoder; and
means for providing said one or more signaling elements, in or along said constructed bitstream to the decoder.

According to an embodiment, the apparatus comprises
means for receiving a volumetric frame; and
means for generating the video components and their associated atlas components from the volumetric frame.

According to an embodiment of the apparatus said means for providing one or more signaling elements is configured to indicate a mapping of video components from number of atlases to one or more layered video codec bitstream.

According to an embodiment, said means for providing one or more signaling elements is configured to provide a priority and dependency relation of a given layer in the one or more signaling elements.

According to an embodiment, the signaling element is one of:
a Visual Volumetric Video-based Coding parameter set extension;
a Visual Volumetric Video-based Coding unit;
an Atlas Sequence Parameter Set extension;
a Common Atlas Sequence Parameter Set extension;
a supplemental enhancement information message.

An apparatus according to a third aspect comprises at least one processor and at least one memory storing instructions that, when executed by the at least one processor, cause the apparatus at least to:
obtain bitstreams of video components of a layered volumetric video;
analyze the video components to determine a relationship between the video components and corresponding layers;
provide one or more signaling elements, based on the analysis, to indicate that the volumetric video comprises video components at different layers;
provide in the one or more signaling elements information of the relationship between the video components and corresponding layers;
encapsulate the layered video coded bitstreams to visual volumetric video-based coding units; and
construct a bitstream according to specified constraints.

A method according to a fourth aspect comprises:
receiving a bitstream comprising video components of a layered volumetric video;
demultiplexing the video components of the volumetric video;
receiving one or more signaling elements;
examining the one or more signaling elements to determine whether the volumetric video comprises video components at different layers;
based on the examining, extracting from the one or more signaling elements information of relationship between the video components and corresponding layers; and
re-multiplexing the layered video components into one layered video bitstream for video decoding based on the information of relationship between the video components and corresponding layers.

An apparatus according to a fifth aspect comprises at least one processor and at least one memory storing instructions that, when executed by the at least one processor, cause the apparatus at least to:
obtain bitstreams of video components of a layered volumetric video;
analyze the video components to determine a relationship between the video components and corresponding layers;
provide one or more signaling elements, based on the analysis, to indicate that the volumetric video comprises video components at different layers;
provide in the one or more signaling elements information of the relationship between the video components and corresponding layers;
encapsulate the layered video coded bitstreams to visual volumetric video-based coding units; and
construct a bitstream according to specified constraints.

An apparatus according to a sixth aspect comprises
means for receiving a bitstream comprising video components of a layered volumetric video;
means for demultiplexing the video components of the volumetric video;
means for receiving one or more signaling elements;
means for examining the one or more signaling elements to determine whether the volumetric video comprises video components at different layers;
means for, based on the examining, extracting from the one or more signaling elements information of relationship between the video components and corresponding layers; and
means for re-multiplexing the layered video components into one layered video bitstream for video decoding based on the information of relationship between the video components and corresponding layers.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Figs. 1a and 1b show an encoder and decoder for encoding and decoding 2D pictures;
Figs. 2a and 2b show a compression and a decompression process for 3D volumetric video;
Fig. 3 shows an example of block-to-patch mapping with 4 projected patches onto an atlas;
Figs. 4a - 4c show an illustrative example of a patch projection into 2D domain for atlas data;
Fig. 5a shows a flow chart for an encoding method according to an embodiment;
Fig. 5b shows a flow chart for a decoding method according to an embodiment;
Fig. 6a shows an exemplified block chart of an encoder according to an embodiment;
Fig. 6b shows an exemplified block chart of a decoder according to an embodiment;
Fig. 7a shows an example of a sequence of layered video access-units, each containing picture units;
Fig. 7b shows an example of a bitstream format that carries coded layered video atlas frames; and
Fig. 7c shows an example of a V3C bitstream with V3C units of type V3C_LVI, in accordance with an embodiment.

### DETAILED DESCRIPTON OF SOME EXAMPLE EMBODIMENTS

In the following, several embodiments of the invention will be described in the context of point cloud models for volumetric video coding. It is to be noted, however, that the invention is not limited to specific scene models or specific coding technologies. In fact, the different embodiments have applications in any environment where coding of volumetric scene data is required.

There are many ways to capture and represent a volumetric frame. The format used to capture and represent it depends on the processing to be performed on it, and the target application using it. Some exemplary representations are listed below.

A volumetric frame can be represented as a point cloud. A point cloud is a set of unstructured points in 3D space, where each point is characterized by its position in a 3D coordinate system (e.g. Euclidean), and some corresponding attributes (e.g. colour information provided as RGBA value, or normal vectors). The RGBA (red, Green, Blue, Alpha) color space is a color space that includes an extra channel (alpha channel) for representing the transparency information of an image. In other words, in RGBA the transparency information is stored in the alpha channel, and the color information is stored in the three RGB channels.

A volumetric frame can be represented as images, with or without depth, captured from multiple view points in 3D space. In other words, it can be represented by one or more view frames (where a view is a projection of a volumetric scene on to a plane (the camera plane) using a real or virtual camera with known/computed extrinsics and intrinsics). Each view may be represented by a number of components (e.g. geometry, colour, transparency, and occupancy picture), which may be part of the geometry picture or represented separately.

A volumetric frame can be represented as a mesh. A mesh is a collection of points, called vertices, and connectivity information between vertices, called edges. Vertices along with edges form faces. The combination of vertices, edges and faces can uniquely approximate shapes of objects.

A video codec comprises an encoder that transforms the input video into a compressed representation suited for storage/transmission, and a decoder that can uncompress the compressed video representation back into a viewable form. An encoder may discard some information in the original video sequence in order to represent the video in a more compact form (i.e. at lower bitrate).

Volumetric video may be captured using one or more three-dimensional (3D) cameras. When multiple cameras are in use, the captured footage is synchronized so that the cameras provide different viewpoints to the same world. In contrast to traditional 2D/3D video, volumetric video describes a 3D model of the world where the viewer is free to move and observer different parts of the world.

Depending on the capture, the volumetric video may enable the viewer to move in six degrees of freedom (6DOF), i.e both translational and rotational movement of their viewing pose: in contrast to common 360° video, where the user has from 2 to 3 degrees of freedom (yaw, pitch, and possibly roll), a volumetric video represents a 3D volume of space rather than a flat image plane. Volumetric video frames contain a large amount of data because they model the contents of a 3D volume instead of just a two-dimensional (2D) plane. A volumetric frame can contain many number of objects, and the positioning and movement of these objects in the scene can result in many dis-occluded regions. Furthermore, interaction of light and materials in objects and surfaces in a volumetric frame may generate complex light fields that can produce texture variations for even a slight change of pose. However, only a relatively small part of the volume changes over time. Therefore, it may be possible to reduce the total amount of data by only coding information about an initial state and changes which may occur between frames. Volumetric video can be rendered from synthetic 3D animations, reconstructed from multi-view video using 3D reconstruction techniques such as structure from motion, or captured with a combination of cameras and depth sensors such as LiDAR (Light Detection and Ranging), for example.

Volumetric video data represents a three-dimensional scene or object, and thus such data can be viewed from any viewpoint. Volumetric video data can be used as an input for augmented reality (AR), virtual reality (VR) and mixed reality (MR) applications. Such data describes geometry (shape, size, position in 3D-space) and respective attributes (e.g. color, opacity, reflectance, ...), together with any possible temporal changes of the geometry and attributes at given time instances (e.g. frames in 2D video). Volumetric video is either generated from 3D models, i.e. computer-generated imagery (CGI), or captured from real-world scenes using a variety of capture solutions, e.g. a multi-camera, a laser scan, a combination of video and dedicated depths sensors, etc. Also, a combination of CGI and real-world data is possible. Examples of representation formats for such volumetric data are triangle meshes, point clouds, or voxel. Temporal information about the scene can be included in the form of individual capture instances, i.e. "frames" in 2D video, or other means, e.g. position of an object as a function of time.

Increasing computational resources and advances in 3D data acquisition devices has enabled reconstruction of highly detailed volumetric video representations of natural scenes. Infrared, lasers, time-of-flight and structured light are all examples of devices that can be used to construct 3D video data. Representation of the 3D data depends on how the 3D data is used. Dense voxel arrays have been used to represent volumetric medical data. In 3D graphics, polygonal meshes are extensively used. Point clouds on the other hand are well suited for applications, such as capturing real world 3D scenes where the topology is not necessarily a 2D manifold. Another way to represent 3D data is coding this 3D data as a set of texture and depth map as is the case in the multi-view plus depth. Closely related to the techniques used in multi-view plus depth is the use of elevation maps, and multi-level surface maps.

In 3D point clouds, each point of each 3D surface is described as a 3D point with color and/or other attribute information such as surface normal or material reflectance. Point cloud is a set of data points in a coordinate system, for example in a three-dimensional coordinate system being defined by X, Y, and Z coordinates. The points may represent an external surface of an object in the screen space, e.g. in a three-dimensional space.

In dense point clouds or voxel arrays, the reconstructed 3D scene may contain tens or even hundreds of millions of points. If such representations are to be stored or interchanged between entities, then efficient compression of the presentations becomes fundamental. Standard volumetric video representation formats, such as point clouds, meshes, voxel, suffer from poor temporal compression performance. Identifying correspondences for motion-compensation in 3D-space is an ill-defined problem, as both, geometry and respective attributes may change. For example, temporal successive "frames" do not necessarily have the same number of meshes, points or voxel. Therefore, compression of dynamic 3D scenes is inefficient. 2D-video based approaches for compressing volumetric data, i.e. multiview with depth, have much better compression efficiency, but rarely cover the full scene. Therefore, they provide only limited 6DOF capabilities.

Instead of the above-mentioned approach, a 3D scene, represented as meshes, points, and/or voxel, can be projected onto one, or more, geometries. These geometries may be "unfolded" or packed onto 2D planes (two planes per geometry: one for texture, one for depth), which are then encoded using standard 2D video compression technologies. Relevant projection geometry information may be transmitted alongside the encoded video files to the decoder. The decoder decodes the video and performs the inverse projection to regenerate the 3D scene in any desired representation format (not necessarily the starting format).

Projecting volumetric models onto 2D planes allows for using standard 2D video coding tools with highly efficient temporal compression. Thus, coding efficiency can be increased greatly. Using geometry-projections instead of 2D-video based approaches based on multiview and depth, provides a better coverage of the scene (or object). Thus, 6DOF capabilities are improved. Using several geometries for individual objects improves the coverage of the scene further. Furthermore, standard video encoding hardware can be utilized for real-time compression/decompression of the projected planes. The projection and the reverse projection steps are of low complexity.

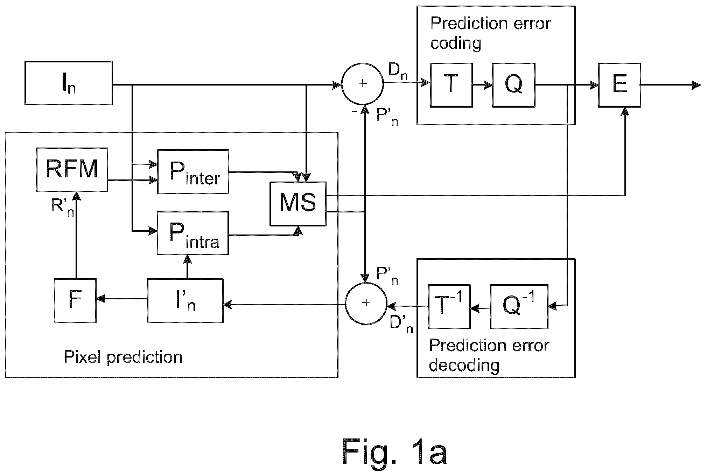

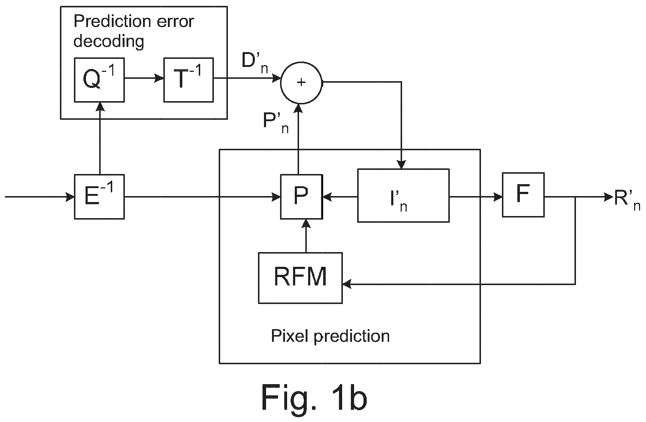

Figs. 1a and 1b show an encoder and decoder for encoding and decoding the 2D texture pictures, geometry pictures and/or auxiliary pictures. A video codec consists of an encoder that transforms an input video into a compressed representation suited for storage/transmission and a decoder that can uncompress the compressed video representation back into a viewable form. Typically, the encoder discards and/or loses some information in the original video sequence in order to represent the video in a more compact form (that is, at lower bitrate). An example of an encoding process is illustrated in Fig. 1a. Fig. 1a illustrates an image to be encoded (Iⁿ); a predicted representation of an image block (P'ⁿ); a prediction error signal (Dⁿ); a reconstructed prediction error signal (D'ⁿ); a preliminary reconstructed image (I'ⁿ); a final reconstructed image (R'ⁿ); a transform (T) and inverse transform (T⁻¹); a quantization (Q) and inverse quantization (Q⁻¹); entropy encoding I; a reference frame memory (RFM); inter prediction (Pᵢₙₜₑᵣ); intra prediction (Pᵢₙₜᵣₐ); mode selection (MS) and filtering (F).

An example of a decoding process is illustrated in Fig. 1b. Fig. 1b illustrates a predicted representation of an image block'(P'ⁿ); a reconstructed prediction error signal'(D'ⁿ); a preliminary reconstructed image'(I'ⁿ); a final reconstructed image'(R'ⁿ); an inverse transform (T⁻¹); an inverse quantization (Q⁻¹); an entropy decoding (E⁻¹); a reference frame memory (RFM); a prediction (either inter or intra) (P); and filtering (F).

Many hybrid video encoders encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate). Video codecs may also provide a transform skip mode, which the encoders may choose to use. In the transform skip mode, the prediction error is coded in a sample domain, for example by deriving a sample-wise difference value relative to certain adjacent samples and coding the sample-wise difference value with an entropy coder.

Many video encoders partition a picture into blocks along a block grid. For example, in the High Efficiency Video Coding (HEVC) standard, the following partitioning and definitions are used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples. A CU with the maximum allowed size may be named as LCU (largest coding unit) or coding tree unit (CTU) and the video picture is divided into non-overlapping LCUs.

In HEVC, a picture can be partitioned in tiles, which are rectangular and contain an integer number of LCUs. In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

Entropy coding/decoding may be performed in many ways. For example, context-based coding/decoding may be applied, where in both the encoder and the decoder modify the context state of a coding parameter based on previously coded/decoded coding parameters. Context-based coding may for example be context adaptive binary arithmetic coding (CABAC) or context-adaptive variable length coding (CAVLC) or any similar entropy coding. Entropy coding/decoding may alternatively or additionally be performed using a variable length coding scheme, such as Huffman coding/decoding or Exp-Golomb coding/decoding. Decoding of coding parameters from an entropy-coded bitstream or codewords may be referred to as parsing.

The phrase along the bitstream (e.g. indicating along the bitstream) may be defined to refer to out-of-band transmission, signaling, or storage in a manner that the out-of-band data is associated with the bitstream. The phrase decoding along the bitstream or alike may refer to decoding the referred out-of-band data (which may be obtained from out-of-band transmission, signaling, or storage) that is associated with the bitstream. For example, an indication along the bitstream may refer to metadata in a container file that encapsulates the bitstream.

A first texture picture may be encoded into a bitstream, and the first texture picture may comprise a first projection of texture data of a first source volume of a scene model onto a first projection surface. The scene model may comprise a number of further source volumes.

In the projection, data on the position of the originating geometry primitive may also be determined, and based on this determination, a geometry picture may be formed. This may happen for example so that depth data is determined for each or some of the texture pixels of the texture picture. Depth data is formed such that the distance from the originating geometry primitive such as a point to the projection surface is determined for the pixels. Such depth data may be represented as a depth picture, and similarly to the texture picture, such geometry picture (such as a depth picture) may be encoded and decoded with a video codec. This first geometry picture may be seen to represent a mapping of the first projection surface to the first source volume, and the decoder may use this information to determine the location of geometry primitives in the model to be reconstructed. In order to determine the position of the first source volume and/or the first projection surface and/or the first projection in the scene model, there may be first geometry information encoded into or along the bitstream. It is noted that encoding a geometry (or depth) picture into or along the bitstream with the texture picture is only optional and arbitrary for example in the cases where the distance of all texture pixels to the projection surface is the same or there is no change in said distance between a plurality of texture pictures. Thus, a geometry (or depth) picture may be encoded into or along the bitstream with the texture picture, for example, only when there is a change in the distance of texture pixels to the projection surface.

An attribute picture may be defined as a picture that comprises additional information related to an associated texture picture. An attribute picture may, for example, comprise surface normal, opacity, or reflectance information for a texture picture. A geometry picture may be regarded as one type of an attribute picture, although a geometry picture may be treated as its own picture type, separate from an attribute picture.

Texture picture(s) and the respective geometry picture(s), if any, and the respective attribute picture(s) may have the same or different chroma format.

Terms texture (component) image and texture (component) picture may be used interchangeably. Terms geometry (component) image and geometry (component) picture may be used interchangeably. A specific type of a geometry image is a depth image. Embodiments described in relation to a geometry (component) image equally apply to a depth (component) image, and embodiments described in relation to a depth (component) image equally apply to a geometry (component) image. Terms attribute image and attribute picture may be used interchangeably. A geometry picture and/or an attribute picture may be treated as an auxiliary picture in video/image encoding and/or decoding.

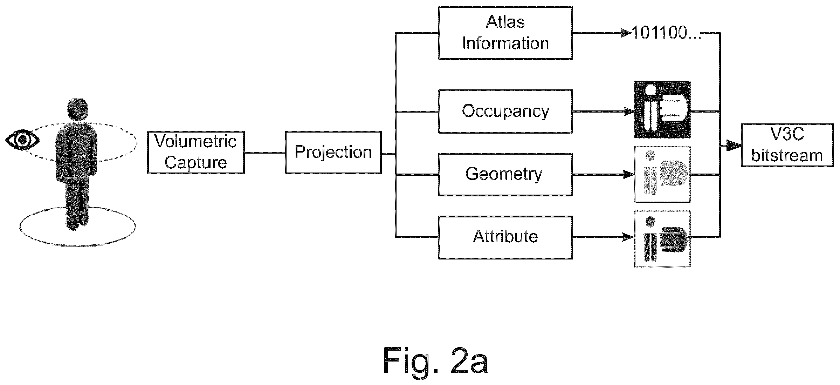

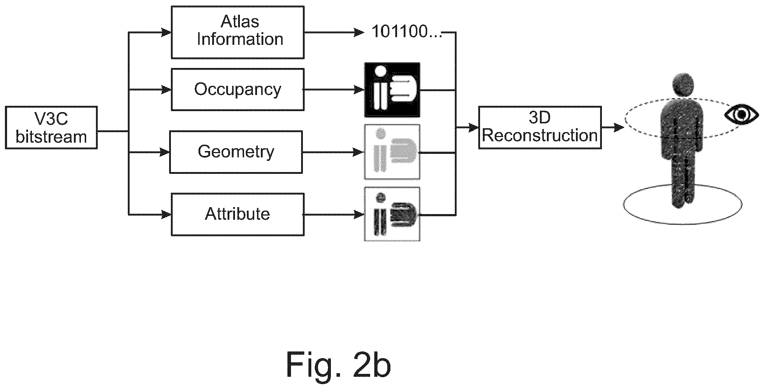

Figures 2a and 2b illustrate an overview of exemplified compression/ decompression processes. The processes may be applied, for example, in MPEG visual volumetric video-based coding (V3C), defined currently in ISO/IEC DIS 23090-5: "Visual Volumetric Video-based Coding and Video-based Point Cloud Compression"_{'} 2nd Edition.

Visual volumetric video, a sequence of visual volumetric frames, if uncompressed, may be represented by a large amount of data, which can be costly in terms of storage and transmission. This has led to the need for a high coding efficiency standard for the compression of visual volumetric data.

V3C specification enables the encoding and decoding processes of a variety of volumetric media by using video and image coding technologies. This is achieved through conversion of such media from their corresponding 3D representation to multiple 2D representations, also referred to as V3C components, before coding such information. Such representations may include occupancy, geometry, and attribute components. The occupancy component can inform a V3C decoding and/or rendering system of which samples in the 2D components are associated with data in the final 3D representation. The geometry component contains information about the precise location of 3D data in space, while attribute components can provide additional properties, e.g. texture or material information, of such 3D data. An example of volumetric media conversion at an encoder is shown in Fig. 2a and an example of a 3D reconstruction at a decoder is shown in Fig. 2b.

Additional information that allows associating all these subcomponents and enables the inverse reconstruction, from a 2D representation back to a 3D representation is also included in a special component, referred to in this document as the atlas. An atlas consists of multiple elements, named as patches. Each patch identifies a region in all available 2D components and contains information necessary to perform the appropriate inverse projection of this region back to the 3D space. The shape of such regions is determined through a 2D bounding box associated with each patch as well as their coding order. The shape of these regions is also further refined after the consideration of the occupancy information.

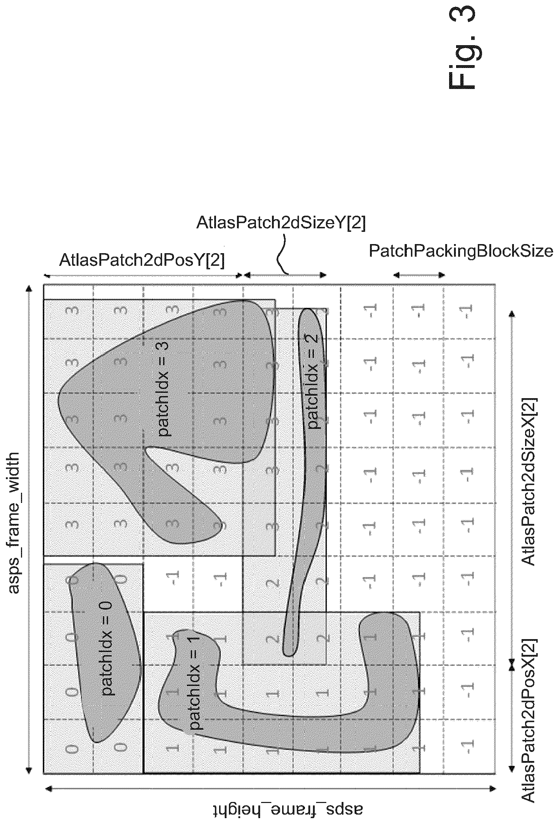

Atlases are partitioned into patch packing blocks of equal size. The 2D bounding boxes of patches and their coding order determine the mapping between the blocks of the atlas image and the patch indices. Fig. 3 shows an example of block-to-patch mapping with 4 projected patches onto an atlas when asps_patch_precedence_order_flag is equal to 0. Projected points are represented with dark grey. The area that does not contain any projected points is represented with light grey. Patch packing blocks are represented with dashed lines. The number inside each patch packing block represents the patch index of the patch to which it is mapped.

Axes orientations are specified for internal operations. For instance, the origin of the atlas coordinates is located on the top-left corner of the atlas frame. For the reconstruction step, an intermediate axes definition for a local 3D patch coordinate system is used. The 3D local patch coordinate system is then converted to the final target 3D coordinate system using appropriate transformation steps.

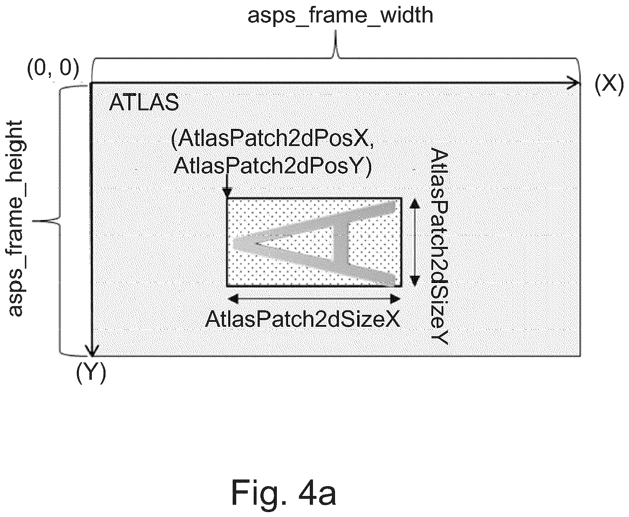

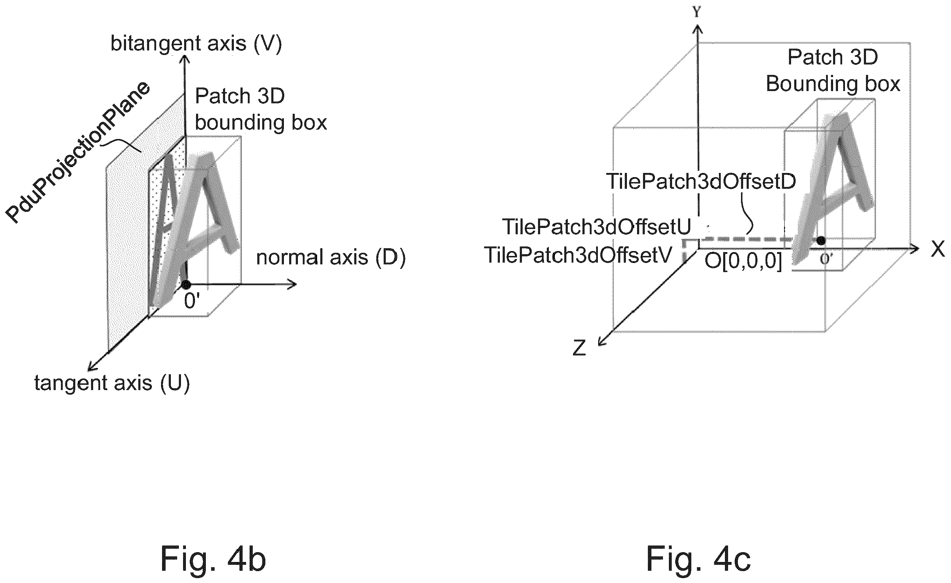

Fig. 4a shows an example of a single patch packed onto an atlas image. This patch is then converted to a local 3D patch coordinate system (U, V, D) defined by the projection plane with origin O', tangent (U), bi-tangent (V), and normal (D) axes. For an orthographic projection, the projection plane is equal to the sides of an axis-aligned 3D bounding box, as shown in Fig. 4b. The location of the bounding box in the 3D model coordinate system, defined by a left-handed system with axes (X, Y, Z), can be obtained by adding offsets TilePatch3dOffsetU, TilePatch3DOffsetV, and TilePatch3DOffsetD, as illustrated in Fig. 4c.

The generic mechanism of V3C may be used by applications targeting volumetric content. One of such applications is MPEG immersive video (MIV; defined in ISO/IEC 23090-12).

MIV enables volumetric video coding for applications in which a scene is recorded with multiple RGB(D) (red, green, blue, and optionally depth) cameras with overlapping fields of view (FoVs). One example setup is a linear array of cameras pointing towards a scene. This multi-scopic view of the scene allows a 3D reconstruction and therefore 6DoF/3DoF+ consumption.

MIV uses the patch data unit concept from V3C and extends it by using camera views for reprojection.

Coded V3C video components are referred to in this document as video bitstreams, while an atlas component is referred to as the atlas bitstream. Video bitstreams and atlas bitstreams may further be split into smaller units, referred to here as video and atlas sub-bitstreams, respectively, and may be interleaved together, after the addition of appropriate delimiters, to construct a V3C bitstream.

V3C patch information is contained in atlas bitstream, atlas_sub_bistream(), which contains a sequence of NAL units. A NAL unit is specified to format data and provide header information in a manner appropriate for conveyance on a variety of communication channels or storage media. All data are contained in NAL units, each of which contains an integer number of bytes. A NAL unit specifies a generic format for use in both packet-oriented and bitstream systems. The format of NAL units for both packet-oriented transport and sample streams is identical except that in the sample stream format specified in Annex D of ISO/IEC 23090-5 each NAL unit can be preceded by an additional element that specifies the size of the NAL unit.

NAL units in atlas bitstream can be divided to atlas coding layer (ACL) and non-atlas coding layer (non-ACL) units. The former dedicated to carry patch data while the latter to carry data necessary to properly parse the ACL units or any additional auxiliary data.

In the nal_unit_header() syntax nal_unit_type specifies the type of the RBSP data structure contained in the NAL unit as specified in Table 4 of ISO/IEC 23090-5. nal layer id specifies the identifier of the layer to which an ACL NAL unit belongs or the identifier of a layer to which a non-ACL NAL unit applies. The value of nal_layer_id shall be in the range of 0 to 62, inclusive. The value of 63 may be specified in the future by ISO/IEC. Decoders conforming to a profile specified in Annex A of ISO/IEC 23090-5 shall ignore (i.e., remove from the bitstream and discard) all NAL units with values of nal layer id not equal to 0.

Thus, the visual volumetric video-based coding (V3C; ISO/IEC 23090-5) as described above specifies a generic syntax and mechanism for volumetric video coding. The generic syntax can be used by applications targeting volumetric content, such as point clouds, immersive video with depth, and mesh representations of volumetric frames. The purpose of the specification is to define how to decode and interpret the associated data (atlas data in ISO/IEC 23090-5) which tells a renderer how to interpret 2D frames for reconstructing volumetric frames.

The two applications of V3C (ISO/IEC 23090-5), i.e. V-PCC (ISO/IEC 23090-5) and MIV (ISO/IEC 23090-12), use a number of V3C syntax elements with a slightly modified semantics. An example on how the generic syntax element can be differently interpreted by the application is pdu_projection_id.
- In case of V-PCC the syntax element specifies the index of the projection plane for the patch. There can be 6 or 18 projections planes in V-PCC, and they are implicit, i.e. pre-determined.
- In case of MIV pdu_projection_id corresponds to a view ID, i.e. identifies which view the patch originated from. View IDs and their related information is explicitly provided in MIV view parameters list and may be tailored for each content.

Moreover, MPEG 3DG (ISO SC29 WG7) group has started a work on a third application, i.e. V3C mesh compression. It is also envisaged that Mesh coding will re-use V3C syntax as much as possible and can also slightly modify the semantics.

To differentiate between applications of a V3C bitstream that may allow a client to properly interpret the decoded data, V3C uses a ptl_profile_toolset_idc. .

While designing V3C specification it was envisaged that amendments or new editions can be created in the future. To ensure that the first implementations of V3C decoders are compatible with any future extension, many fields in the specified syntax structures were marked as reserved for future use.

For example, the second edition of V3C introduced an extension in VPS related to MIV and packed video component, which is illustrated in Table 1 below.

**Table 1. (An ISO/IEC 23090-5 example)**

| | | | | | |
|---|---|---|---|---|---|
| | ... | | | | |
| | | **vps_extension_present_flag** | | | u(1) |
| | | if( vps_extension_present_flag ) { | | | |
| | | | **vps_packing_information_present_flag** | | u(1) |
| | | | **vps_miv_extension_present_**flag | | u(1) |
| | | | **vps_extension_**6bits | | u(6) |
| | | } | | | |
| | | if( vps_packing_information_present_flag ) { | | | |
| | | | for( k = 0 ; k <= vps_atlas_count_minus1; k++ ) { | | |
| | | | j | = vps_atlas_id[ k ] | |
| | | | | **vps_packed_video_present_flag**[ j ] | |
| | | | | if( vps_packed_video_present_flag[ j ] ) | |
| | | | | packing_information( j ) | |
| | | | } | | |
| | | } | | | |
| | | if( vps_miv_extension_present_flag ) | | | |
| | | | vps_miv_extension() /^{∗}Specified in ISO/IEC 23090-12 ^{∗}/ | | |
| | | if( vps_extension_6bits ) { | | | |
| | | | **vps_extension_length_minus1** | | ue(v) |
| | | | for( j = 0; j < vps_extension_length_minus1 + 1; j++ ) { | | |
| | | | | **vps_extension_data_byte** | u(8) |
| | | | } | | |
| | | } | | | |
| | | byte_alignment( ) | | | |
| | } | | | | |

The V3C includes signaling mechanisms, through profile_tier_level syntax structure in VPS, to support interoperability while restricting capabilities of V3C profiles. V3C also includes an initial set of tool constraint flags to indicate additional restrictions on profile. Currently the sub-profile indicator syntax element is always present, but the value of 0xFFFFFFFF indicates that no sub-profile is used, i.e. the full profile is supported.

**Table 2. The profile_tier_level syntax structure in VPS,**

| | | | | | |
|---|---|---|---|---|---|
| | | profile_tier_level( ) { | | | Descriptor |
| | | | **ptl_tier_flag** | | u(1) |
| | | | ptl_profile_codec_group_idc | | u(7) |
| | | | **ptl_profile_toolset_idc** | | u(8) |
| | | | ptl_profile_reconstruction_idc | | u(8) |
| | | | ptl_reserved_zero_16bits | | u(16) |
| | | | ptl_max_decodes_idc | | u(4) |
| | | | **ptl_reserved_0xfff_12bits** | | u(12) |
| | | | **ptl_level_idc** | | u(8) |
| | | | ptl_num_sub_profiles | | u(6) |
| | | | ptl_extended_sub_profile_flag | | u(1) |
| | | | for( i = 0; i < ptl_num_sub_profiles; i++ ) | | |
| | | | | **ptl_sub_profile_idc**[ i ] | u(v) |
| | | | **ptl_toolset_constraints_present_flag** | | u(1) |
| | | | if( ptl_toolset_constraints_present_flag ) | | |
| | | | | profile_toolset_constraints_information ( ) | |
| | | } | | | |

Scalable video coding refers to coding structure where one bitstream can contain multiple representations of the content e.g. at different bitrates, resolutions or frame rates. In these cases, the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver.

Scalable video coding may be realized through multi-layered coding. Multi-layered coding is a concept wherein an un-encoded visual representation of a scene is, by processes such as transformation and filtering, mapped into multiple dependent or independent representations (called layers). One or more encoders are used to encode a layered visual representation. When the layers contain redundancies, the use of a single encoder can, by using inter-layer prediction techniques, encode with a significant gain in coding efficiency. Layered video coding is typically used to provide some form of scalability in services - e.g. quality scalability, spatial scalability, temporal scalability, and view scalability.

A portion of a scalable video bitstream that provides a certain decoded representation, such as a base quality video or a depth map video for a bitstream that also contains texture video, and is independently decodable from other portions of the scalable video bitstream, may be referred to as an independent layer. A scalable video bitstream may comprise multiple independent layers, e.g. a texture video layer, a depth video layer, and an alpha map video layer. A portion of a scalable video bitstream that provides a certain decoded representation or enhancement, such as a quality enhancement to a particular fidelity or a resolution enhancement to a certain picture width and height in samples, and requires decoding of one or more other layers (a.k.a. reference layers) in the scalable video bitstream due to inter-layer prediction may be referred to as a dependent layer or a predicted layer.

In some scenarios, a scalable bitstream includes a "base layer", which may provide a basic representation, such as the lowest quality video available, and one or more enhancement layers. In order to improve coding efficiency for an enhancement layer, the coded representation of that layer may depend on one or more of the lower layers, i.e. inter-layer prediction may be applied. E.g. the motion and mode information of the enhancement layer can be predicted from lower layers. Similarly, the pixel data of the lower layers can be used to create prediction for the enhancement layer. The term enhancement layer may refer to enhancing one or more aspects of reference layer(s), such as quality or resolution. A portion of the bitstream that remains after removal of all enhancement layers may be referred to as the base layer.

It needs to be understood that the term layer may be conceptual, i.e. the bitstream syntax might not include signaling of layers or the signaling of layers is not in use in a scalable bitstream that conceptually comprises several layers. The term scalability layer may be used interchangeably with the term layer.

Scalability modes or scalability dimensions may include but are not limited to the following:
- Quality scalability: Base layer pictures are coded at a lower quality than enhancement layer pictures, which may be achieved for example using a greater quantization parameter value (i.e., a greater quantization step size for transform coefficient quantization) in the base layer than in the enhancement layer.
- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.
- Bit-depth scalability: Base layer pictures are coded at lower bit-depth (e.g. 8 bits) than enhancement layer pictures (e.g. 10 or 12 bits).
- Dynamic range scalability: Scalable layers represent a different dynamic range and/or images obtained using a different tone mapping function and/or a different optical transfer function.
- Chroma format scalability: Base layer pictures provide lower spatial resolution in chroma sample arrays (e.g. coded in 4:2:0 chroma format) than enhancement layer pictures (e.g. 4:4:4 format).
- Color gamut scalability: enhancement layer pictures have a richer/broader color representation range than that of the base layer pictures - for example the enhancement layer may have UHDTV (ITU-R BT.2020) color gamut and the base layer may have the ITU-R BT.709 color gamut.
- Region-of-interest (ROI) scalability: An enhancement layer represents of spatial subset of the base layer. ROI scalability may be used together with other types of scalability, e.g. quality or spatial scalability so that the enhancement layer provides higher subjective quality for the spatial subset.
- View scalability, which may also be referred to as multiview coding. The base layer represents a first view, whereas an enhancement layer represents a second view. A view may be defined as a sequence of pictures representing one camera or viewpoint. It may be considered that in stereoscopic or two-view video, one video sequence or view is presented for the left eye while a parallel view is presented for the right eye.
- Depth scalability, which may also be referred to as depth-enhanced coding. A layer or some layers of a bitstream may represent texture view(s), while other layer or layers may represent depth view(s).

In modern video coding standards, such as High Efficiency Video Coding (HEVC, ISO/IEC 23008-2) and Versatile Video Coding (VVC, ISO/IEC 23090-3), layers can be grouped into layer-sets in which the combination of layers in a layer-set can produce a valid decodable bitstream. When layers are coded using inter-layer prediction techniques, the coded layers have a decoding hierarchy.

VVC supports temporal scalability by including a temporal ID in the NAL unit header. A hierarchical coding structure is defined since pictures of a particular temporal sub-layer cannot be used as reference for inter-prediction by pictures of a lower temporal sub-layer.

In addition to temporal scalability, VVC also supports multi-layered scalability for various types of scalability including spatial scalability, SNR scalability, and view scalability. For spatial scalability, an enhancement layers can be predicted using single-layer intra-prediction and inter-prediction. In addition to inter-layer prediction, where resampled reconstructed video content from sone or more reference layer can be used for prediction. Furthermore, SNR scalability is achieved similarly as spatial scalability, but without changes in the spatial resolution. With VVC it may be possible to extract a sub-bitstream extraction process, and the requirement that each sub-bitstream extraction output be a conforming bitstream.

Similar to VVC, HEVC also supports temporal scalability through temporal layering. In HEVC, scalability is provided by extensions, e.g. scalable HEVC (SHVC), Multiview HEVC (MV-HEVC) and 3D-HEVC. In MV-HEVC and 3D-HEVC, a layer can represent texture, depth, etc. There can be dependencies between layers that are exploited through inter-layer prediction. As in VVC, it is also possible in MV-HEVC and 3D-HEVC to extract sub-bitstreams. SHVC, MV-HEVC, and 3D-HEVC use a common basis specification, specified in Annex F of the version 2 of the HEVC standard. This common basis comprises for example high-level syntax and semantics e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

In HEVC and VVC, the NAL unit header syntax comprises a layer identifier (ID) syntax element, also referred to as nuh_layer_id. Coded video NAL units of the same layer have the same nuh_layer_id value. A dependent layer may be required to have a greater nuh_layer_id value than the nuh layer id values of its reference layers.

In one embodiment, signaling information is provided so that the signaling information may be used to identify layered video components in volumetric video-based coded bitstream such as V3C bitstream. Furthermore, signaling information may also be provided indicating that additional constraint(s) was/were applied during the creation of the volumetric video-based coded bitstream. Such new signaling information that indicates which layer of the layered video bitstream contains which component could be added to V3C extension, for example.

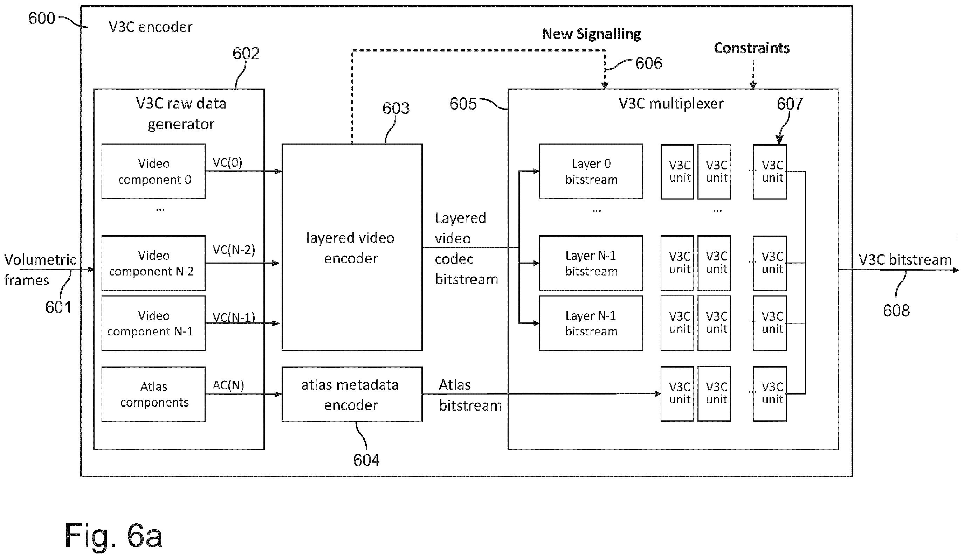

An overview of an encoder arrangement according to an example embodiment is presented in Fig. 6a. In this embodiment, a volumetric frame 601 is provided to a V3C encoder 600 in which a V3C raw data generator 602 generates the video components VC(0),..., VC(N-1) and their associated atlas components AC(N). Video components VC(0),..., VC(N-1) are encoded with a layered video encoder 603 and an atlas metadata encoder 604 encodes the atlas components AC(N). The V3C encoder 600 maintains information about which layer of the layered video bitstream contains which component and passes this information 606 to a V3C multiplexer 605. The V3C multiplexer 605 encapsulates the layered video codec bitstreams to V3C units 607 and constructs a bitstream 608 according to specified constraints. The signaling information in the coded V3C bitstream may allow decoding and rendering the complete bitstream, or even parts of the bitstream, ubiquitously.

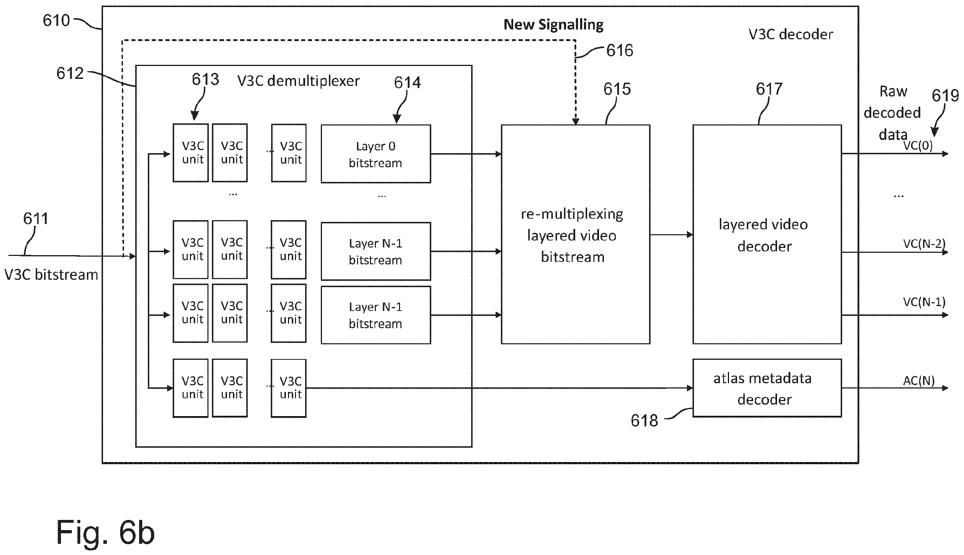

An overview of a decoder arrangement according to another example embodiment is presented in Fig. 6b. In this embodiment, a V3C bitstream 611 is provided to a V3C decoder 610. A demultiplexer 612 of the V3C decoder 610 demultiplexes layered video bitstream from V3C units 613 and passes the demultiplexed video bitstreams 614 to a re-multiplexer 615. The re-multiplexer 615 also receives signaling information 616 regarding *inter alia* the identification of layered video components in volumetric video-based coded bitstream such as V3C bitstream and possibly an indication that additional constraint(s) was/were applied during the creation of the volumetric video-based coded bitstream. The re-multiplexer 615 re-multiplexes the layered video components bitstream into one layered video bitstream based on the signaling information and video data. The reconstructed layered video bitstream is passed to a layered video decoder 617. The re-multiplexing of layered video components can be done based on the new signaling provided by V3C bitstream as well due to the constrains which were applied during creation of the V3C bitstream. Layered video decoder 617 outputs synchronized decoded raw data (i.e. video frames). An atlas metadata decoder 618 decodes the encoded atlas information to reconstruct the atlas components AC(N) 619 associated with the video components VC(0),..., VC(N-1).

In embodiments for encoding the information 606 and in embodiments for decoding the signaling information 616 may comprise a set or list of mappings, where each mapping may indicate a correspondence of a layer in a video bitstream with a component of a V3C bitstream. In an embodiment, a mapping comprises but is not limited to one or more of the following:
- layer identifier within a video bitstream
- atlas identifier of a V3C bitstream
- component type of a V3C bitstream, wherein component type may comprise but is not limited to one or more of the following: (texture) atlas information, occupancy information, geometry information, attribute information.

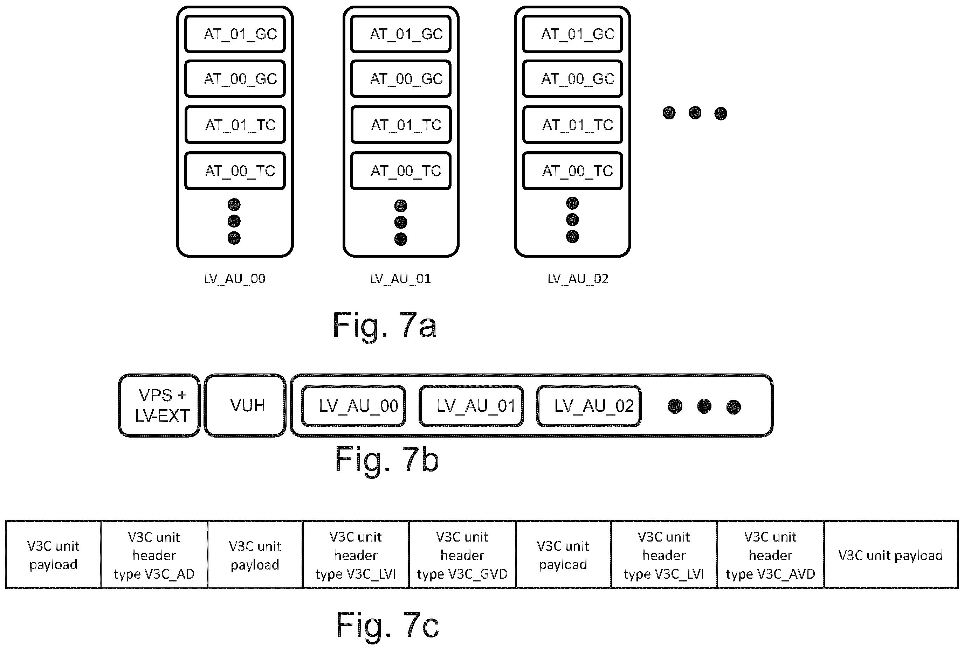

In another embodiment, a coded layered bitstream is provided to a V3C encoder 600. An example of such a coded layered video is shown in Fig. 7a as a sequence of layered video access-units, each containing picture units. The block labeled LV_AU_XX shows the access-units. Within each access-unit are the picture units. The picture units can be atlas video frames of type geometry (with suffix GC, e.g. AT_01_GC), or a texture attributes (with suffix TC, e.g. AT_01_TC) or any other allowed types in V3C. There may be more than one atlases coded in the same layered bitstream. The presence of a coded layered video is signalled in the V3C parameter extension syntax. The mapping of the layers in the video bitstream to atlas_ids and their types are provided in a new syntax structure called the vps_layered_video_components_extension. A new type of V3C unit, called V3C LVD, is defined and this V3C unit contains the coded layered video data. An example of the bitstream format that carries coded layered video atlas frames is shown in Fig. 7b. The presence of layered video is signalled in the VPS extension syntax.

In the following, some examples how to implement the signaling will be described.

### V3C parameter set extension

In accordance with an embodiment, the signaling may be provided on V3C level utilising a V3C parameter set extension.

In one embodiment to differentiate layered V3C video components, a V3C encoder could add new signaling information to V3C extension in VPS. The extension would indicate a mapping of V3C video components from number of atlases to one or more layered video codec bitstream. Such extension could as well provide a priority and dependency relation of a given layer. An excerpt of a VPS syntax table with the new extension is provided below in Table 3.

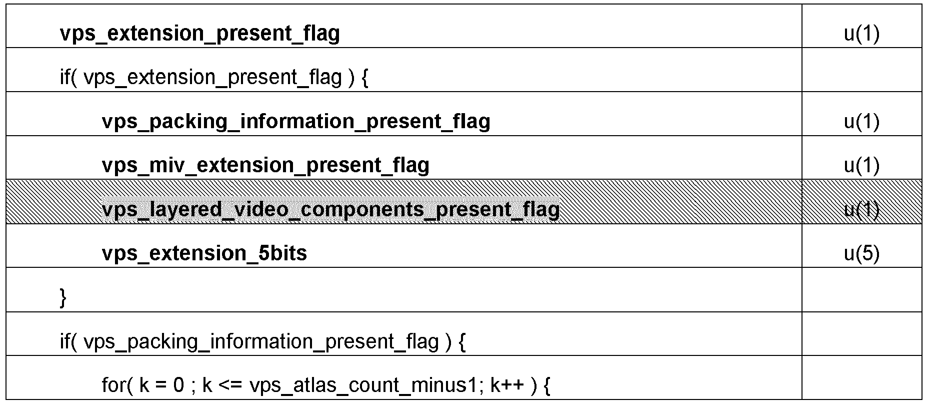

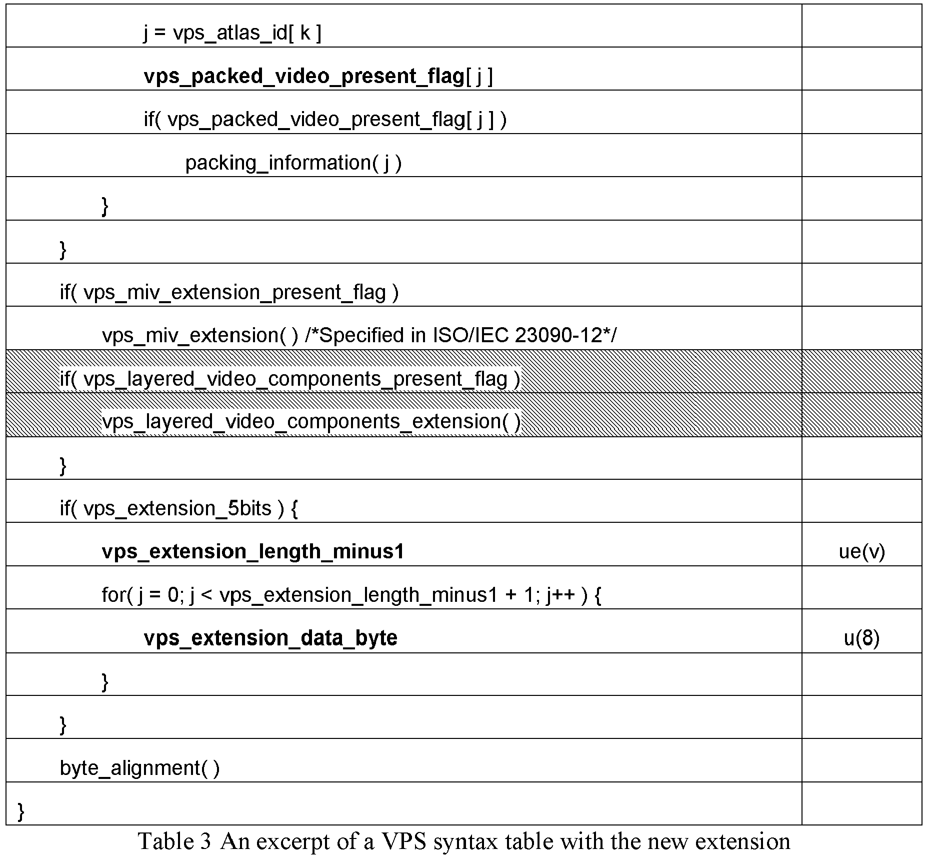

In this example embodiment presence or absence of the indication of a mapping of V3C video components is included in the extension as the parameter **vps_layered_video_components_present_flag.** According to an embodiment, if the value of vps_layered_video_components_present_flag is equal to 1, it specifies that the vps_layered_video_components_extension( ) syntax structure is present in the v3c_parameter_set( ) syntax structure. On the other hand, the value of the vps_layered_video_components_present_flag equal to 0 specifies that this syntax structure is not present.

In the following Table 4 an example of a syntax structure for the mapping is described.

**Table 4 An example of the structure of the new extension**

| | | | | | |
|---|---|---|---|---|---|
| vps_layered_video_components_extension ( ) { | | | | | Descriptor |
| | **vlv_layered_bitstream_count_minus1** | | | | u(8) |
| | for( j = 0; j < vlv_layered_bitstream_count_minus1 + 1; j++ ) { | | | | |
| | | **vlv_layered_bitstream_id[** j ] | | | u(8) |
| | | **vlv_layers_count_minus2[** j ] | | | u(8) |
| | | for( i = 0; i < vlv_layers_count_minus2[ j ] + 2; i++ ) { | | | |
| | | | /* information about v3c bitstream */ | | |
| | | | **vlv_atlas_id**[ j ][ i ] | | u(8) |
| | | | **vlv_video_component_type**[ j ][ i ] | | u(8) |
| | | | if( vlv_video_component_type [ j ][ i ] == V3C_AVD ∥ | | |
| | | | | vlv_video_component_type [ j ][ i ] == V3C_GVD) { | |
| | | | | **vlv_video_component_map_index**[ j ][ i ] | u(7) |
| | | | | **vlv_video_component_auxiliary_data_flag**[ j ][ i ] | u(1) |
| | | | } | | |
| | | | if( vlv_video_component_type[ j ][ i ] == V3C_AVD ) { | | |
| | | | | **vlv_video_component_attr_index**[ j ][ i ] | u(8) |
| | | | | **vlv_video_component_attr_partition_index**[ j ][ i ] | u(8) |
| | | | } | | |
| | | | /* information about layered video codec bitstream */ | | |
| | | | **vlv_layer_id**[ j ][ i ] | | u(8) |
| | | | **vlv_is_dependent_flag**[ j ][ i ] | | u(1) |
| | | | if ( vlv_is_dependent_flag[ j ][ i ] ) | | |
| | | | | **vlv_dependent_layer_id**[ j ][ i ] | u(8) |
| | | | **vlv_priority_id[** j ][ i ] | | u(8) |
| | | } | | | |
| | } | | | | |
| } | | | | | |

Some of the parameters of this syntax structure are explained in the following.
**vlv_layered**_**bitstream**_**count**_**minus1** plus 1 indicates the number of layered video bitstreams in V3C sequence.
**vlv**_**layers_count_minus2**[ j ] plus 2 indicates the number of layers in the layered video bitstream with index j.
**vlv_layered_bitstream_id**[ j ] indicates the id of the video layered bitstream with index j.
**vlv_atlas_id**[ j ][ i ] plus 2 indicates the ID of the atlas that contains a layer video component with index i of the layered video bitstream with index j.
**vlv_video_component_type**[ j ][ i ] indicates the type of V3C units that contain a layer video component with index i of the layered video bitstream with index j. The values of the vlv_video_component_type[ j ][ i ] shall be as defined in Table 2 "V3C unit types" of ISO/IEC 23090-5.
**vlv_video_component_map_index**[ j ][ i ] indicates the map index of V3C units that contains a layer video component with index i of the layered video bitstream with index j.
**vlv_video_component_auxiliary_data_flag**[ j ][ i ] indicates the value of auxiliary data flag of V3C units that contains a layer video component with index i of the layered video bitstream with index j.
**vlv_video_component_attr_index**[ j ][ i ] indicates the attribute index of V3C units that contains a layer video component with index i of the layered video bitstream with index j.
**vlv_video_component_attr_partition_index**[ j ][ i ] indicates the attribute partition index of V3C units that contains a layer video component with index i of the layered video bitstream with index j.
**vlv_layer_id**[ j ][ i ] indicates the layer ID of a layer video component with index i of the layered video bitstream with index j.
**vlv_is_dependent**_**flag**[ j ] [ i ] equal to 0 indicates that a layer video component with index i of the layered video bitstream with index j is not dependent on any other layer video component. vlv_is_dependent_flag[ j ][ i ] equal to 1 indicates that a layer video component with index i of the layered video bitstream with index j is dependent on other layer video component.
**vlv_dependent_layer_id**[ j ][ i ] indicates the layer ID of a layer video component on which layer video component with index i of the layered video bitstream with index j is dependent on.
**vlv_priority_id**[ j ][ i ] indicates the priority value of a layer video component with index i of the layered video bitstream with index j.

When an encoder receives a V3C video and intends to encode layer information in or along a bitstream based on the example of Table 3, the encoder prepares *inter alia* the VPS syntax element and sets the vps_layered_video_components_present_flag to the value which indicates that the layer information is included. In this example, the value is 1. Furthermore, the encoder inserts for each component the
vps_layered_video_components_extension field based on the Table 4 above.

When a decoder receives the syntax element of Table 3 and the encoded V3C video, the decoder may examine the contents of the syntax element and examines the value of the vps_layered_video_components_present_flag. If the value indicates that layered video components are present in the bitstream, the decoder may extract the layer information of the components based on the contents of the
vps_layered_video_components_extension field.

### Another embodiment of the V3C parameter set extension

The utilization of the V3C parameter set extension embodiment presented above can further be extended and provide signaling that support more than one dependency. An excerpt of an extended vps_layered_video_components_extension syntax structure is provided below in Table 5.

**Table 5**

| | | | | | |
|---|---|---|---|---|---|
| | | if ( vlv_is_dependent_flag[ j ][ i ] ) | | | |
| | | | **vlv_dependency_count_minus1** [ j ][ i ] | | u(8) |
| | | | for( k = 0; k < vlv_dependency_count_minus1[ j ][ i ] + 1; k++ ) { | | |
| | | | | **vlv_dependent_layer_id**[ j ][ i ][ k ] | u(8) |
| | | | } | | |
| | | } | | | |

**vlv_dependency**_**count**_**minus1**[ j ][ i ] plus 1 indicates the number of layer video components on which layer video component with index i of the layered video bitstream with index j is dependent on.

### V3C unit

In one embodiment a new V3C unit type could be defined. This type could be called as V3C_LVI. V3C units of this type would not have payload and they may always preceed V3C units that contain V3C video components that are part of a bigger layered video bitstream, as presented on Fig. 7c. Table 6 shows examples of some V3C unit types, their identifiers and description of the types. In this example the new type is provided with vuh_unit_type index 7.

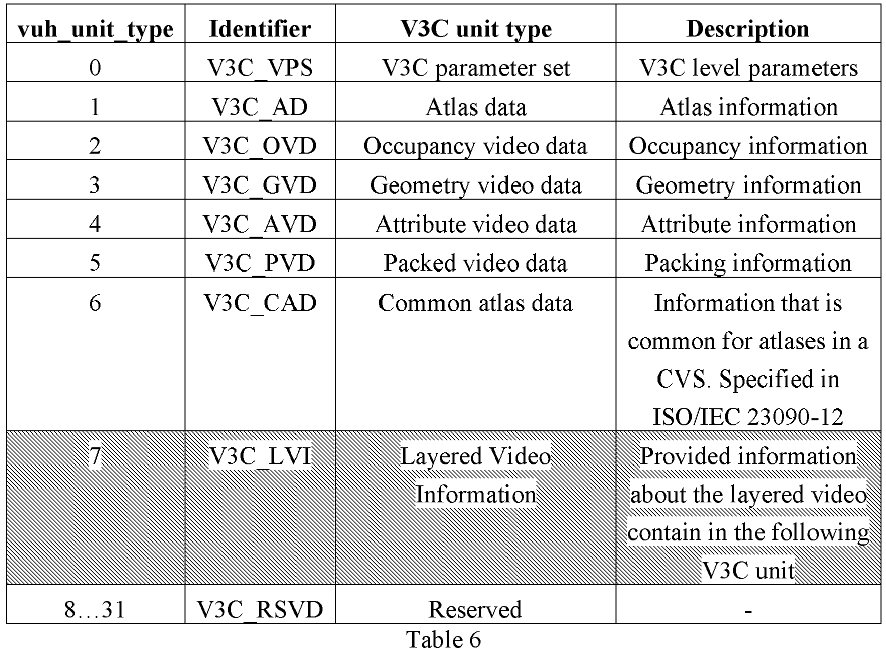

V3C unit of V3C type could have a V3C unit header of the following structure presented in Table 7 below.

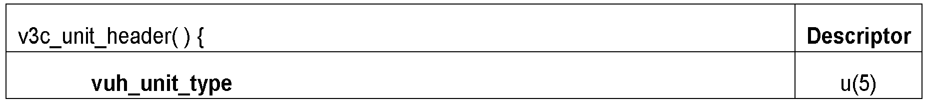

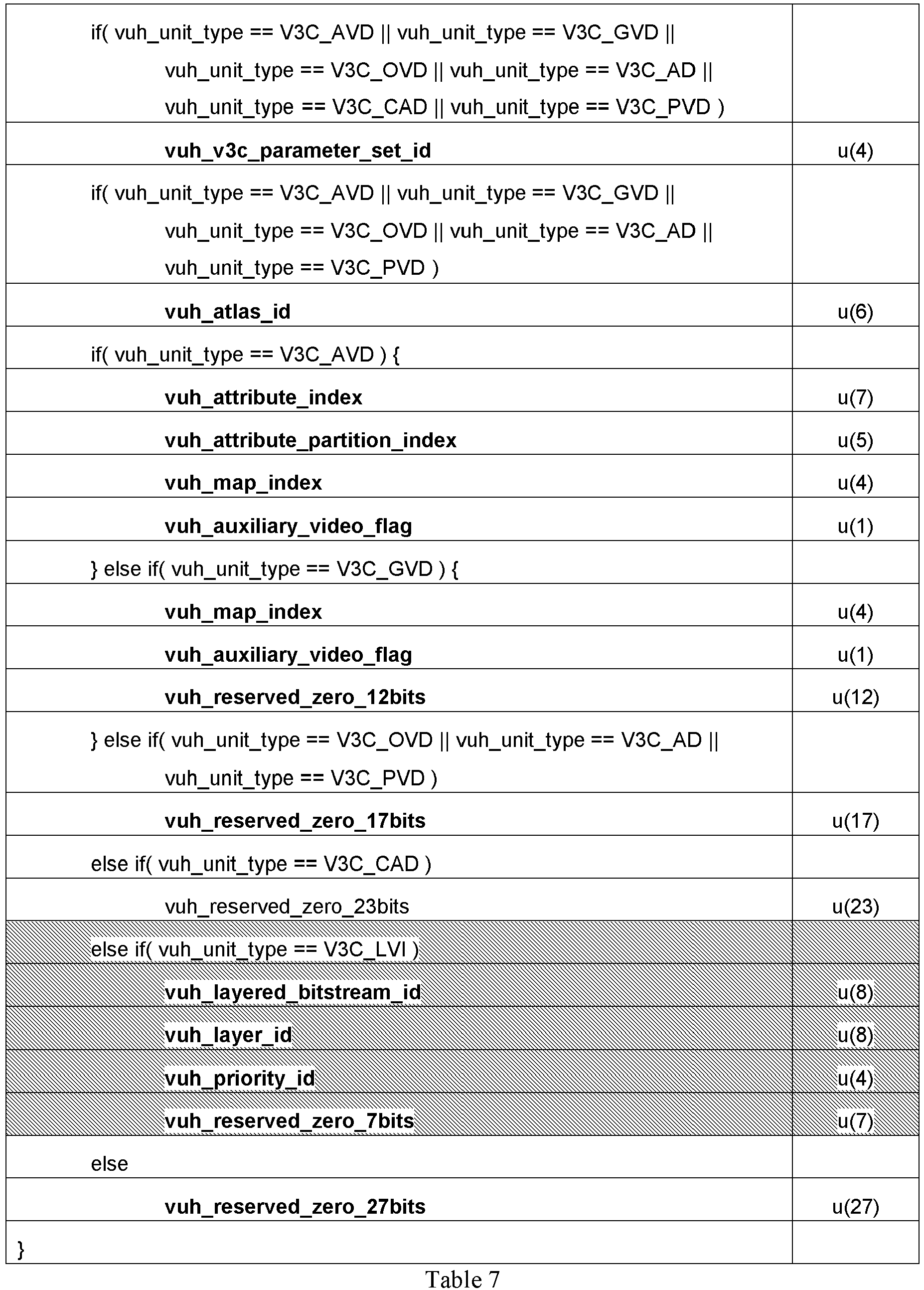

**vuh_layered_bitstream_id** indicates the ID of a layered video bitstream

**vuh_layer_id** indicates the layer ID of a layer video component that is part of layered video bitstream with id equal to vuh_layered_bitstream_id.

**vuh_priority_id** indicates the priority value of the layer video component. There may be several ways to interpret the priority value, but it is outside of the scope of this disclosure.

### Another embodiment of the V3C unit

In another embodiment related to the utilization of the V3C units of type V3C_LVI as presented in the previous embodiment have a payload data that provide extra information how to re-multiplex layered video bitstream. That kind of extra information could be e.g. order count.

### Constraints information

In one embodiment an encoder would set ptl_sub_profile_idc to a predetermined value that would signal to a decoder that the order of V3C units and access units in V3C video components is set in a manner that together with extra signaling information (e.g. information described in the embodiments above) allows to re-multiplex a layered video bitstream.

### Signaling on atlas level

In the following, some embodiments are described in which the signaling is performed on an atlas level.

### ASPS parameter set extension

According to one embodiment, the signaling is implemented as an ASPS parameter set extension as follows.

vps_layered_video_components_extension syntax structures presented in the first and second embodiments above can also be transmitted as an extension of an atlas sequence parameter set. An excerpt of an ASPS syntax table with the new extension is provided below in Table 8.

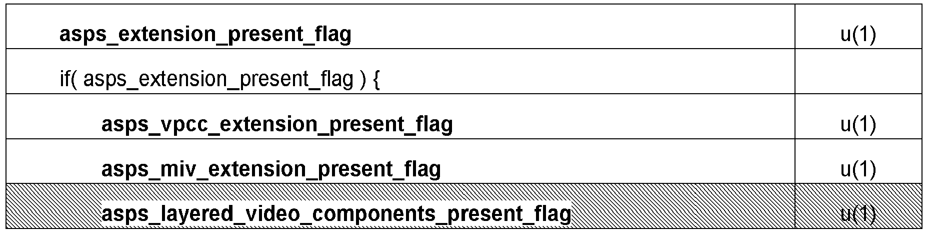

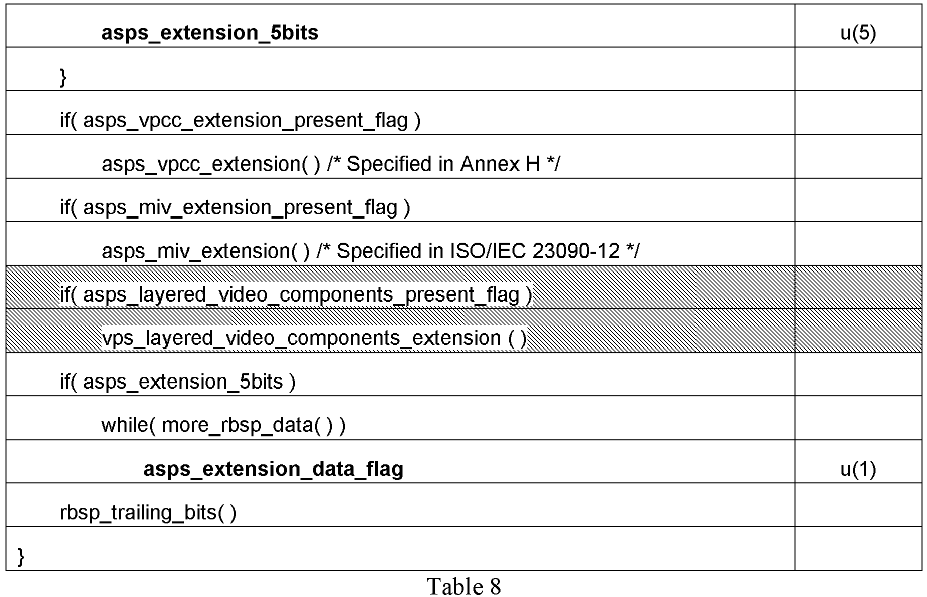

**asps**_**layered_video_components**_**present_flag** equal to 1 specifies that the vps_layered_video_components_extension( ) syntax structure is present in the atlas_sequence_parameter_set( ) syntax structure. asps_layered_video_components_present_flag equal to 0 specifies that this syntax structure is not present.

### CASPS parameter set extension

According to another embodiment, the signaling is implemented as a CASPS parameter set extension as follows.

vps_layered_video_components_extension syntax structures presented in the first and second embodiment using the V3C parameter set extension can also be transmitted as an extension of common atlas sequence parameter set. An excerpt of a CASPS syntax table with the new extension is provided below in Table 9.

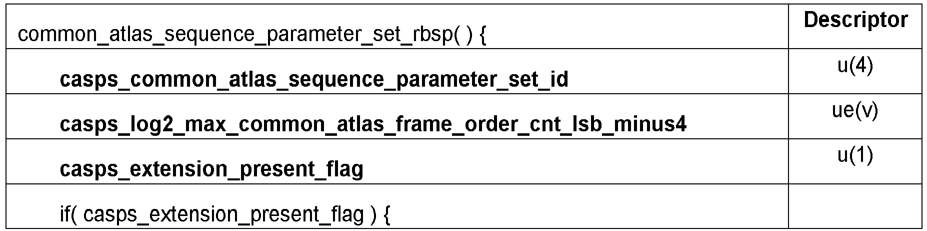

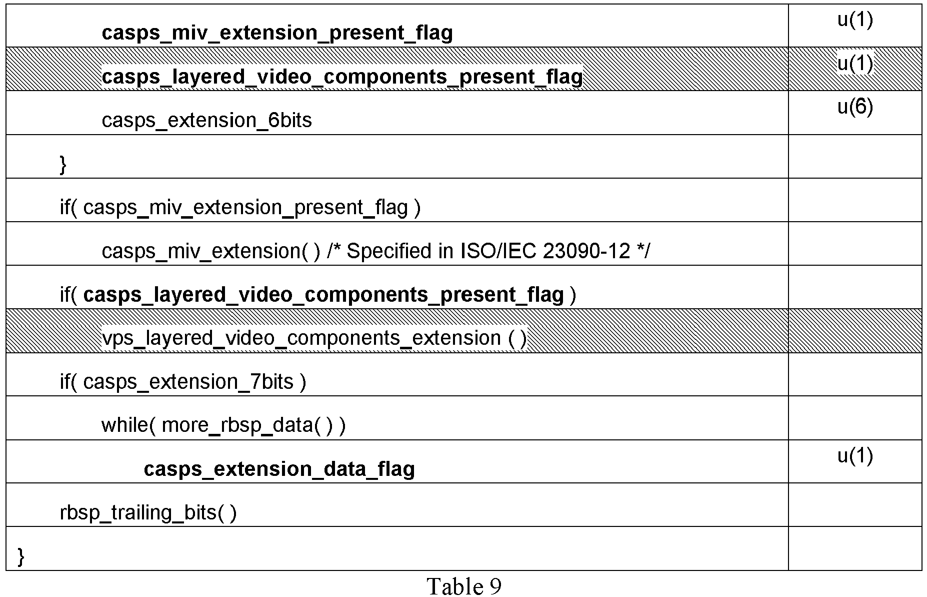

**casps**_**layered_video**_**components**_**present_flag** equal to 1 specifies that the vps_layered_video_components_extension( ) syntax structure is present in the common_atlas_sequence_parameter_set( ) syntax structure. casps_layered_video_components_present_flag equal to 0 specifies that this syntax structure is not present.

### SEI message

According to another embodiment, the signaling is implemented in a SEI (supplemental enhancement information) message e.g. as follows.

vps_layered_video_components_extension syntax structures presented in the first and second embodiments above can also be transmitted as a standalone layered video information SEI message that is send as part of an atlas or common atlas bitstream of V3C.

**Table 10**

| | | |
|---|---|---|
| layered_video_information( ) { | | **Descriptor** |
| | vps_layered_video_components_extension () | |
| } | | |

### Carriage of a coded layered video bitstream in a single V3C video component

In the following, carriage of a coded layered video bitstream in a single V3C video component will be described.

In one embodiment, the input to a V3C encoder is one or more layered video coded atlas bitstreams. When one or more layered video coded bitstream are present, they may be coded in any of the following ways:
- All layers in one layered video bitstream are of the same type; e.g all layers are texture attribute type, or all layers are geometry type.
- All layers in one layered video bitstreams are of different types; e.g. each access-unit of the layered video may contain texture type picture unit in one layer and geometry type PU in another layer.
- The layers of one of the layered bitstreams can encode one atlas using different scalability modes; e.g. spatial scalability, temporal scalability or quality scalability.
- The layers of one of the layered bitstreams may be coded using multiview scalability, when each atlas carries only one view.

The presence of one or more layered bitstreams may be signalled in the same way than what was described in the first embodiment. The syntax element "vps_layered_video_components_present_flag" will signal the presence or absence of a layered coded video and the vps_layered_video_components_extension will provide the necessary mapping between layer_ids, atlas_ids and their types, when the layered coded video is present in the bitstream.

A new V3C unit type VC3_LVD is defined to carry access-units of layered video data. Table 11 shows examples of some V3C unit types, their identifiers and description of the types. In this example, the new type is provided with vuh_unit_type index 7.

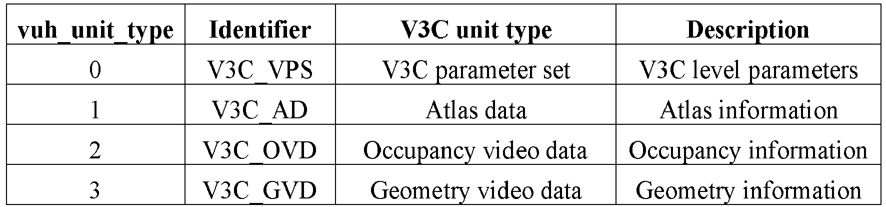

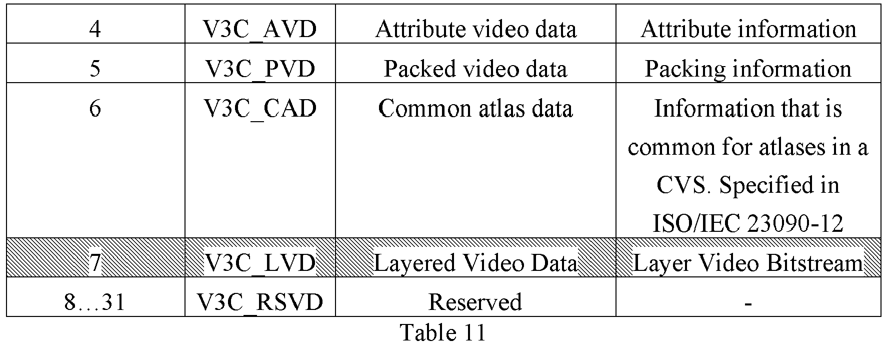

A V3C unit of V3C_LVD may be preceded by a v3c_unit_header syntax structure that may be as follows:

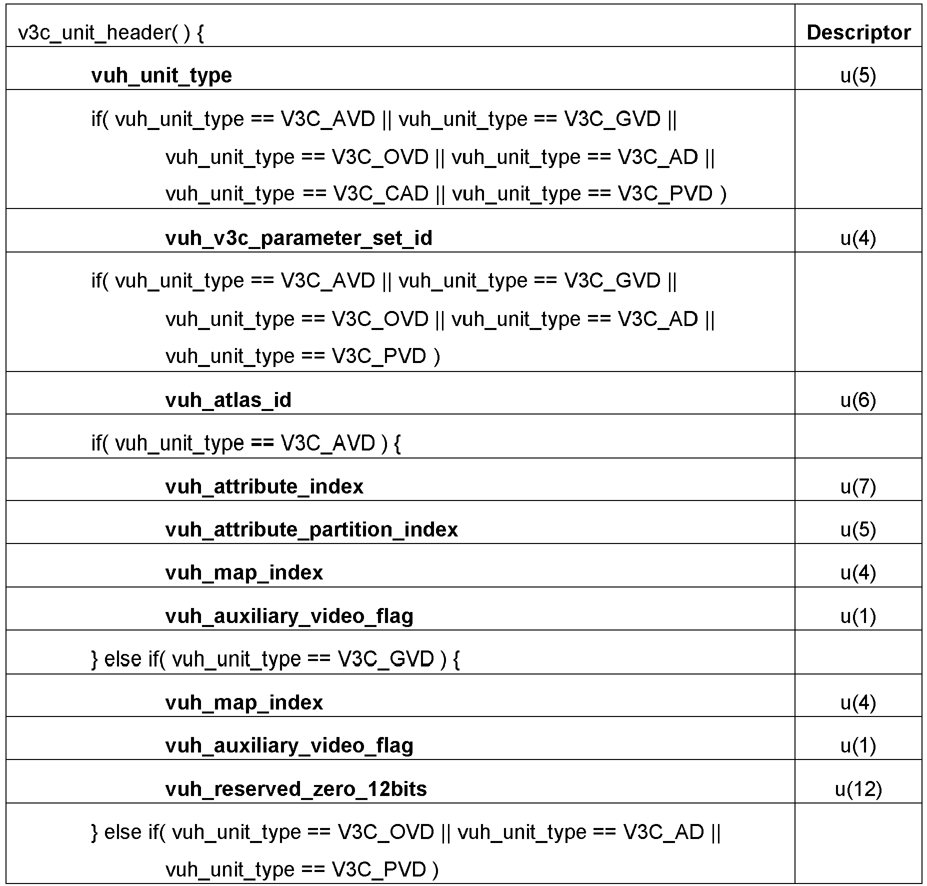

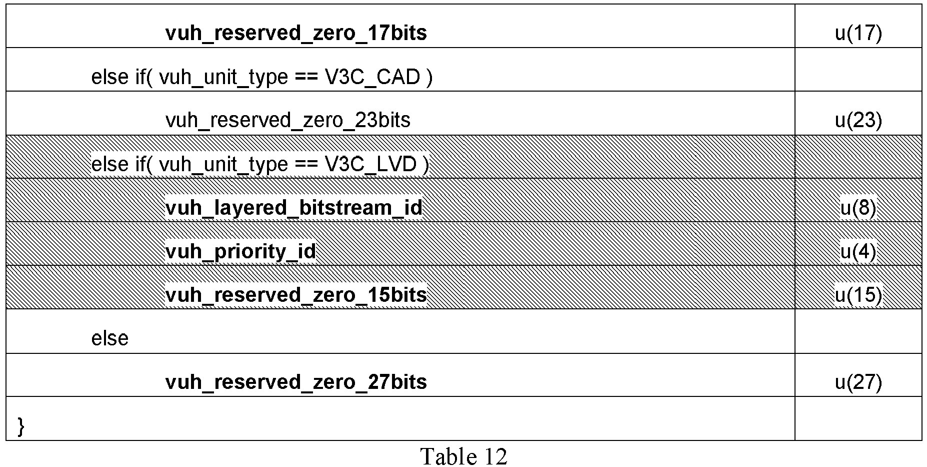

**vuh_layered_bitstream_id** indicates the ID of a layered video bitstream.

**vuh_priority_id** indicates the priority value of layer video component. As was mentioned above, there may be several ways to interpret the priority value, but it is outside of the scope of this disclosure.

In the following, a method for V3C layered video components will be described in more detail, in accordance with an embodiment.

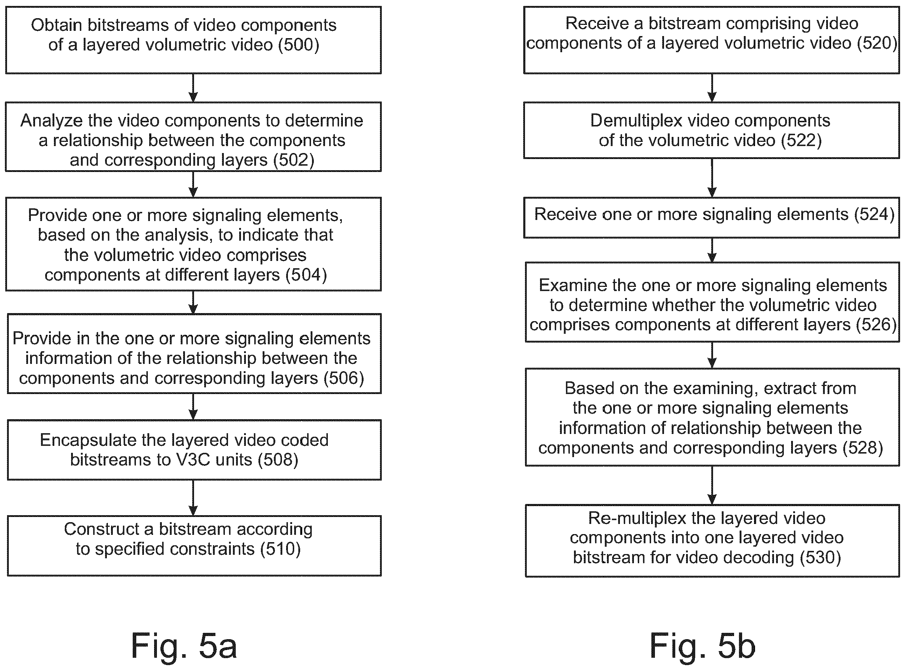

The method, which is disclosed in Fig. 5a as a simplified flow diagram, comprises obtaining (500) bitstreams of video components of a layered volumetric video; analyzing (502) the video components to determine a relationship between the components and corresponding layers; providing (504) one or more signaling elements, based on the analysis, to indicate that the volumetric video comprises components at different layers; providing (506) in the one or more signaling elements information of the relationship between the components and corresponding layers; encapsulating (508) the layered video coded bitstreams to V3C units; and constructing (510) a bitstream according to specified constraints.

Thus, the method enables to provide signaling information that allows to identify layered V3C video components in V3C bitstream and provide information that additional constraints, during the creation of the V3C bitstream, were applied.

The method, which is disclosed in Fig. 5b as a simplified flow diagram, comprises receiving (520) a bitstream comprising video components of a layered volumetric video; demultiplexing (522) video components of the volumetric video; receiving (524) one or more signaling elements; examining (526) the one or more signaling elements to determine whether the volumetric video comprises components at different layers; based on the examining, extracting (528) from the one or more signaling elements information of relationship between the components and corresponding layers; re-multiplexing (530) the layered video components into one layered video bitstream for video decoding.

An apparatus suitable for implementing the method comprises means for obtaining bitstreams of video components of a layered volumetric video; means for analyzing the video components to determine a relationship between the components and corresponding layers; means for providing one or more signaling elements, based on the analysis, to indicate that the volumetric video comprises components at different layers; means for providing in the one or more signaling elements information of the relationship between the components and corresponding layers; means for encapsulating the layered video coded bitstreams to V3C units; and means for constructing a bitstream according to specified constraints.

The embodiments relating to the encoding aspects may likewise be implemented in an apparatus comprising at least one processor and at least one memory, said at least one memory stored with computer program code thereon, the at least one memory and the computer program code configured to, with the at least one processor, cause the apparatus at least to perform: obtain bitstreams of video components of a layered volumetric video; analyze the video components to determine a relationship between the components and corresponding layers; provide one or more signaling elements, based on the analysis, to indicate that the volumetric video comprises components at different layers; provide in the one or more signaling elements information of the relationship between the components and corresponding layers; encapsulate the layered video coded bitstreams to V3C units; and construct a bitstream according to specified constraints.

According to an embodiment, the apparatus comprises computer code configured to cause the apparatus to provide said constructed bitstream to a decoder; and provide said one or more signaling elements, in or along said constructed bitstream to the decoder.

According to an embodiment, the apparatus comprises computer code configured to cause the apparatus to receive a volumetric frame; and generate the video components and their associated atlas components from the volumetric frame.

According to an embodiment, the apparatus comprises computer code configured to indicate a mapping of V3C video components from number of atlases to one or more layered video codec bitstream.

According to an embodiment, the apparatus comprises computer code configured to provide a priority and dependency relation of a given layer in the one or more signaling elements.

The embodiments relating to the decoding aspects may be implemented in an apparatus comprising means for receiving a bitstream comprising video components of a layered volumetric video; means for demultiplexing video components of the volumetric video; means for receiving one or more signaling elements; means for examining the one or more signaling elements to determine whether the volumetric video comprises components at different layers; means for, based on the examining, extracting from the one or more signaling elements information of relationship between the components and corresponding layers; and means for re-multiplexing the layered video components into one layered video bitstream for video decoding.

The embodiments relating to the decoding aspects may likewise be implemented in an apparatus comprising at least one processor and at least one memory, said at least one memory stored with computer program code thereon, the at least one memory and the computer program code configured to, with the at least one processor, cause the apparatus at least to perform: receive a bitstream comprising video components of a layered volumetric video; demultiplex video components of the volumetric video; receive one or more signaling elements; examine the one or more signaling elements to determine whether the volumetric video comprises components at different layers; based on the examining, extract from the one or more signaling elements information of relationship between the components and corresponding layers; and re-multiplex the layered video components into one layered video bitstream for video decoding.

Such apparatuses may comprise e.g. the functional units disclosed in any of the Figs. 1a, 1b, 2a and 2b for implementing the embodiments.

In the above, some embodiments have been described with reference to encoding. It needs to be understood that said encoding may comprise one or more of the following: encoding source image data into a bitstream, encapsulating the encoded bitstream in a container file and/or in packet(s) or stream(s) of a communication protocol, and announcing or describing the bitstream in a content description, such as the Media Presentation Description (MPD) of ISO/IEC 23009-1 (known as MPEG-DASH) or the IETF Session Description Protocol (SDP). Similarly, some embodiments have been described with reference to decoding. It needs to be understood that said decoding may comprise one or more of the following: decoding image data from a bitstream, decapsulating the bitstream from a container file and/or from packet(s) or stream(s) of a communication protocol, and parsing a content description of the bitstream,

In the above, where the example embodiments have been described with reference to an encoder or an encoding method, it needs to be understood that the resulting bitstream and the decoder or the decoding method may have corresponding elements in them. Likewise, where the example embodiments have been described with reference to a decoder, it needs to be understood that the encoder may have structure and/or computer program for generating the bitstream to be decoded by the decoder.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
means for obtaining bitstreams of video components of a layered volumetric video;
means for analyzing the video components to determine a relationship between the video components and corresponding layers;
means for providing one or more signaling elements, based on the analysis, to indicate that the volumetric video comprises video components at different layers;
means for providing in the one or more signaling elements information of the relationship between the video components and corresponding layers;
means for encapsulating the layered video coded bitstreams to visual volumetric video-based coding units; and
means for constructing a bitstream according to specified constraints.

2. The apparatus according to claim 1, comprising
means for providing said constructed bitstream to a decoder; and
means for providing said one or more signaling elements, in or along said constructed bitstream to the decoder.

3. The apparatus according to claim 1 or 2, comprising
means for receiving a volumetric frame; and
means for generating the video components and their associated atlas components from the volumetric frame.

4. The apparatus according to claim 3, wherein the signaling element is one of:
a Visual Volumetric Video-based Coding parameter set extension;
a Visual Volumetric Video-based Coding unit;
an Atlas Sequence Parameter Set extension;
a Common Atlas Sequence Parameter Set extension; or
a supplemental enhancement information message.

5. The apparatus according to any of the claims 1 to 4, wherein
said means for encapsulating are configured to use the information of the relationship between the video components and corresponding layers to select the visual volumetric video-based coding unit for each video component.

6. The apparatus according to any of the claims 1 to 5, wherein said means for constructing a bitstream are configured to:
include the visual volumetric video-based coding units in access units in the bitstream; and
include in a header of the visual volumetric video-based coding unit one or more of the following:
said information of the relationship between the video components and corresponding layers;
an identifier of the layered video bitstream;
a layer identifier of the video component as the dependency relation;
an indication of the priority.

7. The apparatus according to any of claims 1 to 6, wherein
said means for providing one or more signaling elements is configured to perform one or more of the following:
indicating a mapping of the video components from number of atlases to one or more layered video coded bitstream;
providing a priority and dependency relation of a given layer in the one or more signaling elements.

8. The apparatus according to any of the claims 1 to 7, wherein said specified constraints include an indication to signal to a decoder that the order of the visual volumetric video-based coding units and access units in visual volumetric video-based video components is set in a manner which together with extra signaling information allows to re-multiplex a layered video bitstream.

9. A method comprising:
obtaining bitstreams of video components of a layered volumetric video;
analyzing the video components to determine a relationship between the video components and corresponding layers;
providing one or more signaling elements, based on the analysis, to indicate that the volumetric video comprises video components at different layers;
providing in the one or more signaling elements information of the relationship between the video components and corresponding layers;
encapsulating the layered video coded bitstreams to visual volumetric video-based coding units; and
constructing a bitstream according to specified constraints.

10. An apparatus comprising:
at least one processor; and
at least one memory storing instructions that, when executed by the at least one processor, cause the apparatus at least to:
obtain bitstreams of video components of a layered volumetric video;
analyze the video components to determine a relationship between the video components and corresponding layers;
provide one or more signaling elements, based on the analysis, to indicate that the volumetric video comprises video components at different layers;
provide in the one or more signaling elements information of the relationship between the video components and corresponding layers;
encapsulate the layered video coded bitstreams to visual volumetric video-based coding units; and
construct a bitstream according to specified constraints.

11. A method comprising:
receiving a bitstream comprising video components of a layered volumetric video;
demultiplexing video components of the volumetric video;
receiving one or more signaling elements;
examining the one or more signaling elements to determine whether the volumetric video comprises video components at different layers;
based on the examining, extracting from the one or more signaling elements information of relationship between the video components and corresponding layers; and
re-multiplexing the layered video components into one layered video bitstream for video decoding.

12. An apparatus comprising:
at least one processor; and
at least one memory storing instructions that, when executed by the at least one processor, cause the apparatus at least to:
receive a bitstream comprising video components of a layered volumetric video;
demultiplex video components of the volumetric video;
receive one or more signaling elements;
examine the one or more signaling elements to determine whether the volumetric video comprises video components at different layers;
based on the examining, extract from the one or more signaling elements information of relationship between the video components and corresponding layers; and
re-multiplex the layered video components into one layered video bitstream for video decoding.

13. An apparatus comprising:
means for receiving a bitstream comprising video components of a layered volumetric video;
means for demultiplexing the video components of the volumetric video;
means for receiving one or more signaling elements;
means for examining the one or more signaling elements to determine whether the volumetric video comprises video components at different layers;
means for, based on the examining, extracting from the one or more signaling elements information of relationship between the video components and corresponding layers; and
means for re-multiplexing the layered video components into one layered video bitstream for video decoding based on the information of relationship between the video components and corresponding layers.

14. The apparatus according to claim 13, comprising at least one of:
means for decoding the layered video bitstream into video components of the layered volumetric video;
means for decoding atlas components associated with the video components from the layered video bitstream;
means for retrieving information of a mapping of video components from number of atlases to layers of the layered volumetric video;
means for retrieving a priority and dependency relation of a given layer in the one or more signaling elements.

15. The apparatus according to claim 13 or 14, wherein said means for extracting are configured to:
obtain said information of the relationship between the video components and corresponding layers from a header of the visual volumetric video-based coding unit.
